## Europäisches Patentamt
## European Patent Office
## Office européen des brevets

(11) Publication number: **0 273 740**
**A2**

# EUROPEAN PATENT APPLICATION

(21) Application number: **87311450.8**

(22) Date of filing: **24.12.87**

(51) Int. Cl.⁴: **B 60 J 7/06**

(30) Priority: **30.12.86 GB 8630990**

(43) Date of publication of application:
**06.07.88 Bulletin 88/27**

(84) Designated Contracting States:
**BE DE ES FR IT NL SE**

(71) Applicant: **Davis, Philip Peter**
**"Woodhurst" 69 The Street**
**Brundall Norwich Norfolk NR13 5LZ (GB)**

(72) Inventor: **Davis, Philip Peter**
**"Woodhurst" 69 The Street**
**Brundall Norwich Norfolk NR13 5LZ (GB)**

(74) Representative: **Stone, Patrick**
**28 Edenside Drive**
**Attleborough Norfolk NR17 2EL (GB)**

(54) **Retractable cover arrangement for vehicle platforms.**

(57) A collapsible framework structure for supporting a retractable cover assembly on a vehicle, which comprises guide rails along each side of the load-carrying vehicle platform, a plurality of arched framework sections (22), and wheeled trolleys (28) mounting the framework sections on the rails for movement therealong, which trolleys are arranged to maintain vertical stability of the arched framework sections individually, avoiding the need to articulate the sections together.

Fig.1

EP 0 273 740 A2

**Description**

Retractable Cover Arrangement for Vehicle Platforms

This invention relates generally to vehicles having a load-carrying platform and more especially to an arrangement which comprises a collapsible framework for supporting a retractable flexible cover for protecting the load on such a platform.

The invention finds application both in the field of railway wagons and in the field of road transport vehicles.

A known retractable cover arrangement for vehicle platforms employs a collapsible framework in the form of a plurality of arched framework sections slidable along rails fixed to the side edges of the platform. The individual framework sections are articulated, one to the next, by crossed arms or scissors, which impart vertical stability to the framework. Each arched framework section carries, at the bottom on each side, a single wheel or roller which runs on the top of the corresponding rail. A retaining element fixed to each wheel mounting engages under the edge of the rail-supporting platform structure to prevent the wheel lifting from the rail.

According to the present invention, a collapsible framework arrangement, for supporting a retractable cover for a load on a vehicle platform, comprises a framework structure having a plurality of arched framework sections each having mounted thereto at the bottom of each side a wheeled trolley, which wheeled trolleys when in engagement with guide rail structures on the vehicle platform act to maintain vertical stability of the arched framework sections individually.

Each wheeled trolley preferably has a pair of wheels for engagement with one of the top and underside of the rail with longitudinal spacing along said rail therebetween, together with further means engaging with the other of the top and underside of the rail, whereby the framework section is restrained against lift. The said pair of wheels preferably engage with the top of the rail.

Thus, in one arrangement, said further means comprises a second pair of wheels engaging the underside of the rail. The wheels of said second pair are preferably in vertical alignment with the wheels of the first-mentioned pair.

In another arrangement, said further means comprises a single wheel longitudinally positioned between the two first-mentioned wheels and laterally displaced relative to the vertical plane through said first pair of wheels, the single wheel being in engagement with the underside of the rail or beneath part of a rail structure of which the guide rail forms part.

In general, the wheels, or at least the wheels of the first-mentioned pair, may be V-grooved for engagement with a box-section rail, or concavely radiused for engagement with a circular-section rail.

In one embodiment, the first pair of wheels form a bogey, for example with wheels concavely radiused around their circumference for running on a circularly cross-sectioned rail, and the anti-lift wheel is carried by a bracket depending generally from the centre of the bogey at one side thereof, to engage beneath a horizontal flange forming part of a rail structure. The said anti-lift wheel may have a flat surfaced circumference, and is preferably adjustably mounted to the bracket to enable its height or level relative to the bogey to be adjusted.

In use, when the cover assembly or hood is retracted, the trolleys are moved towards one another, and the cover carried by the framework structure collapses in concertina fashion, with bulges and/or folds forming in the cover between the framework sections to which the cover is secured. The framework structure may be made of steel, or alternatively of structural aluminium, e.g. rolled aluminium tube, so as to be adequately strong but light enough readily to enable manual retraction and closure. If desired, however, a geared drive or winch, acting on the framework or the cover, may be provided. The cover itself is preferably made of PVC coated polyester fabric and may be equipped with longitudinally extending webbings in order to give a tight and strong closed profile. Across each arched framework section is provided a chafe or wear protector with buckles and straps for holding the cover in position.

In accordance with another preferred feature, in a goods-carrying vehicle of the kind having a load-bearing floor spanning side members extending along the longitudinal edges of said floor to enable the vehicle to carry the longitudinally retractable hood for covering the load, as hitherto described, the side members are each formed with a part having a U-shaped cross-section open laterally outwards of the side of the vehicle, and the longitudinally extending wheel-supportive rail is fixedly carried by the member within the U-shaped cross-section thereof.

Said side members may be constituted by the respective raves in the case of a road transport vehicle, for example. In this case, therefore, each rail forms part of a rail structure fixedly attached to or integrally formed with the respective raves which conventionally extend longitudinally along each side of a road vehicle body.

The above-described preferred feature of the invention enables the wheels supporting the hood to be mounted to the inwardly facing sides of brackets dependent from the base of the arch-shaped collapsible framework structure, so that the wheels are wholly accommodated within the U-shaped cross-section of the side member, e.g. the rave.

Preferably, the upper outwardly facing limb of the U-shaped cross-section is at least approximately level with the vehicle floor. The wheel-supportive rail is preferably fixed, as by welding, to the lower outwardly facing limb of said U-shaped cross-section.

In one arrangement, the complete side member or rave comprises a wholly integral structure comprising the U-shaped part and a dependent flange at the outward edge of the lower outwardly facing limb. In an alternative arrangement, the side member or rave comprises an integrally formed Z-structure, with an outwardly facing flange fixed, as by welding, to said structure so as to constitute the lower limb of the U-shaped cross-section.

Within the U-shaped cross-section, the upper outwardly facing limb may fixedly carry an anti-lift member for preventing the wheels from lifting clear of the wheel-supportive rail.

In the closed condition of the cover assembly or hood, it is important for it to be longitudinally tensioned. In the case of a cover assembly which is open ended to close against end bulkheads forming part of the vehicle, the end framework section may be equipped on each side with a catch member which, as the cover assembly closes towards the bulkhead, engages a latch member forming part of an over-centre latch carried by the bulkhead, whereby, when the over-centre latch is operated, the end framework section is drawn into and maintained in a condition of tight closure with the bulkhead in which the cover assembly is longitudinally tensioned. Analogous latching and tensioning means, for example pillar mounted, may be employed when the cover assembly is provided with end cover pieces for protecting the load on a vehicle platform not provided with end bulkheads.

In general, therefore, the cover assembly or hood may be opened from either the front or the rear or both, fastening being effected by means of a spring loaded latch bolt at the front and an over-centre tensioning device at the rear, the latter device acting when the cover assembly is closed to give a taut appearance and prevent billowing when the vehicle is moving.

The cover may include arch-shaped end panels, which preferably zip-fasten to the longitudinally extending main part of the cover and can be rolled up upwardly to enable retraction and closure and to provide access to the load. Preferably, prerolled (pre-stressed) plastics strips are inserted in pockets in the end panels to assist the rolling-up action.

Weather sealing along the bottom of the sides of the cover, e.g. against the vehicle side member or rave, is preferably enabled by a polypropylene or like plastics biassing strip, again pre-stressed, together with a stiffening cord along the bottom edge of the cover which is inwardly biassed by the biassing strip. Eyelets cooperating with lockable 'D'-rings may be provided to seal the bottoms of the end panels, or alternatively a tube inserted in a bottom hem of the end panel and retained at each end with a spring loaded bolt may be employed.

Biassing means may also be provided, connected between adjacent framework sections to act on the cover, when the cover assembly or hood is retracted, to cause said cover to bulge and/or fold laterally outwardly. In this way, the cover is prevented from fouling the load, with the possibility of resultant damage to the load and/or cover, when the cover assembly is retracted.

A preferred biassing means is a plastics strip, for example a polypropylene strip, secured to each pair of adjacent arched framework sections on each side thereof at an intermediate level in the height thereof, and pre-creased to fold outwardly when the adjacent framework sections move together. The plastics strip, as it folds outwardly, engages the cover to cause the latter to bulge and/or fold outwardly.

As an alternative to use of plastics biassing strips, each arched framework section may be formed in two similar parts articulated to one another at the top of the arch, and means such as hydraulic rams may be provided, possibly operable automatically on retraction of the cover assembly, to pivot the two sides of each framework section further apart, thereby biassing the cover sides outwardly from the load.

The collapsible framework arrangement in accordance with the invention is exemplified with reference to the accompanying drawings, in which:-

Figure 1 is a side elevational view of a railway wagon equipped with a cover assembly in accordance with the invention;

Figure 2 shows part of the cover-supporting framework, the cover being removed;

Figure 3 shows one of the arched framework sections in end elevation;

Figure 4 shows the trolley assembly at the bottom of one side of an arched framework section, in enlarged end elevation;

Figure 5 shows the trolley assembly as seen in enlarged side elevation;

Figure 6 shows a cover biassing means connected between adjacent framework sections;

Figure 7 shows a latching means for tensioning the cover assembly in the closed condition;

Figure 8 is a side view, with the cover broken away, showing a road vehicle trailer equipped with a cover assembly in accordance with the invention;

Figure 9 is an end view of the vehicle trailer;

Figure 10 is an enlarged side view showing the trolley or bogey assembly appertaining to an intermediate framework section;

Figure 11 is a longitudinal cross-sectional view of the trolley assembly of Figure 10;

Figure 12 is a correspondingly enlarged side view showing the trolley or bogey assembly appertaining to an end framework section;

Figure 13 shows in elevation a rear end over-centre locking and tensioning device;

Figure 14 shows in plan a front end locking latch;

Figures 15, 16 and 17 show differing embodiments of vehicle rave incorporating a wheel-supportive rail; and

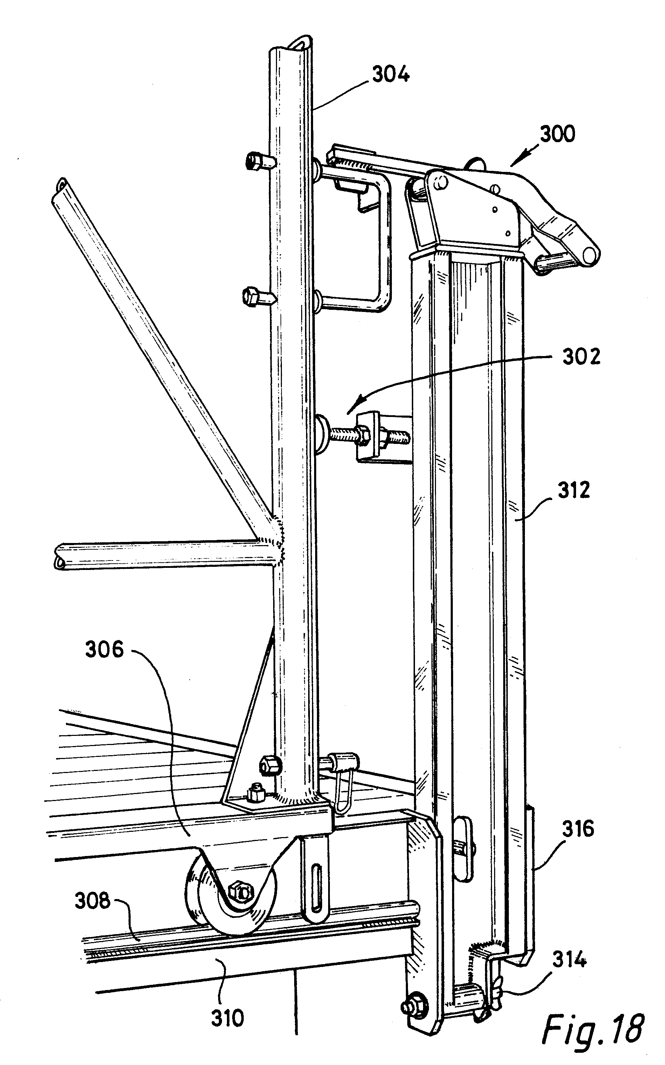

Figure 18 shows a modified support for the rear end locking and tensioning device.

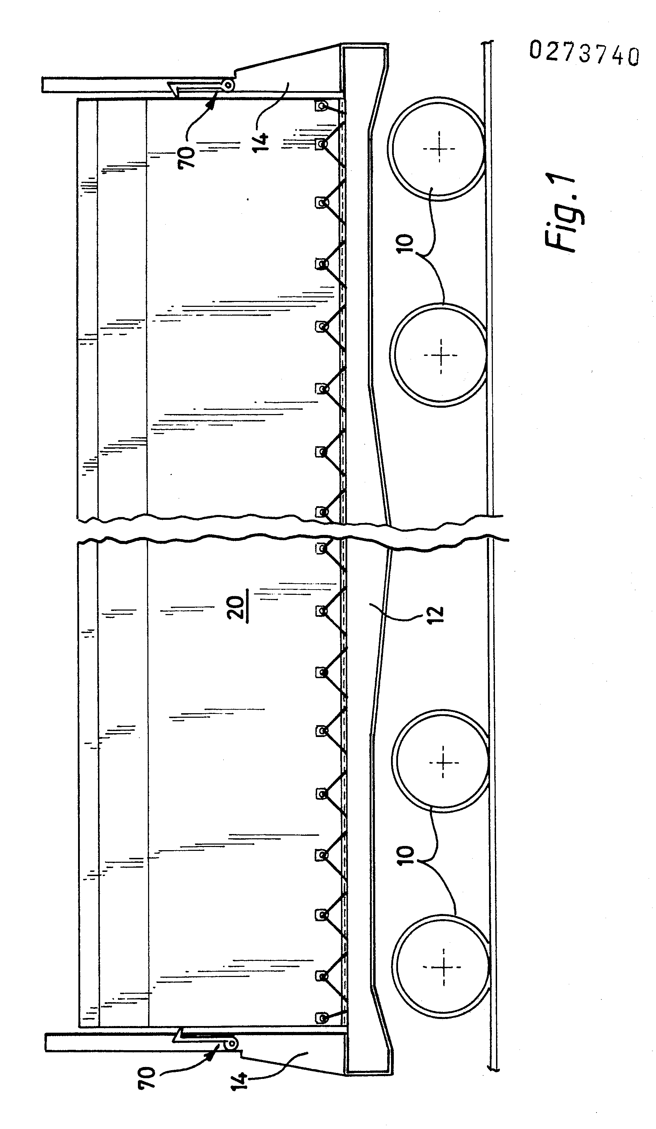

Referring to Figures 1 to 7 of the drawings, Figure 1 shows in outline a railway wagon having wheels 10 and a load-carrying platform structure 12 equipped with front and rear bulkheads 14.

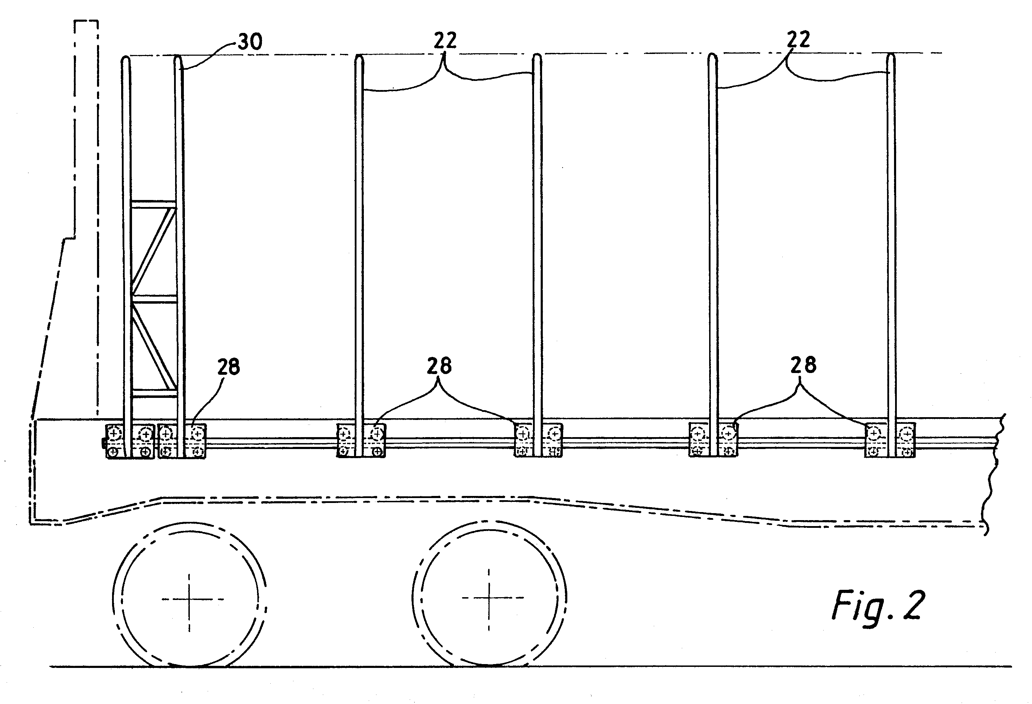

The wagon is fitted with a cover assembly comprising a flexible outer cover 20 fixed to a retractable arched framework underneath. Part of this framework is shown in Figure 2.

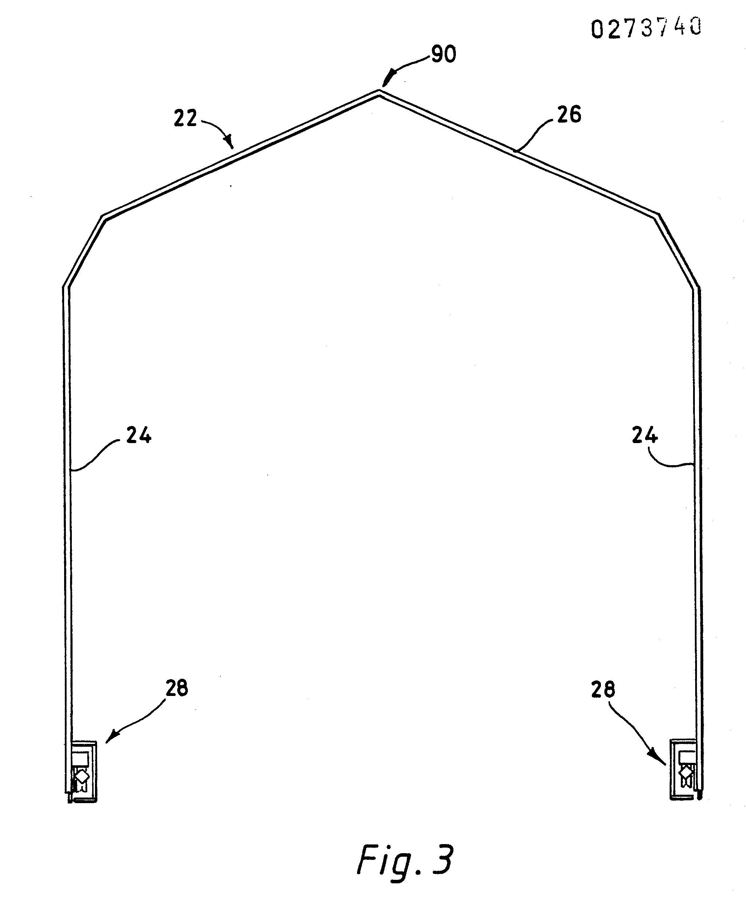

The framework consists of a plurality of individual sections 22 (see also Figure 3), each of arch-like shape with opposed vertical sides 24 connected by a polygonally domed roof arch 26. On each side of the assembly, each framework section 22 is mounted to a trolley unit 28. As will be clear from subsequent description, the two trolley units 28 associated with each framework section are capable of maintaining vertical stability of the section. Thus, the vertical framework sections are individually supported with vertical stability, and articulated scissor arms or the like between adjacent sections are not required.

The framework has two strengthened end sections 30, each consisting of two interconnected planar sections one behind the other, as shown in Figure 2. The end framework sections 30 are also supported on trolley units 28.

The trolley units 28 enable movement of the cover assembly into and out of its retracted position, for which purpose the trolley units run on guide rails forming part of a track assembly fixed to the wagon platform. One such guide rail extends along each side edge of the platform.

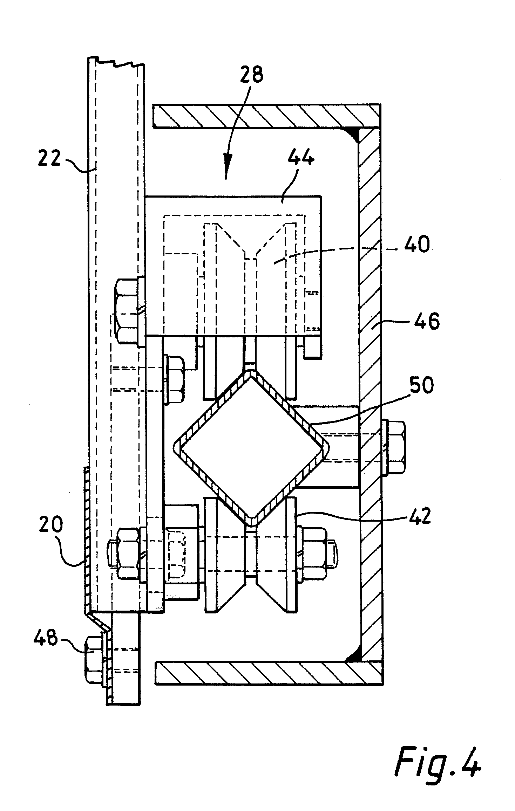

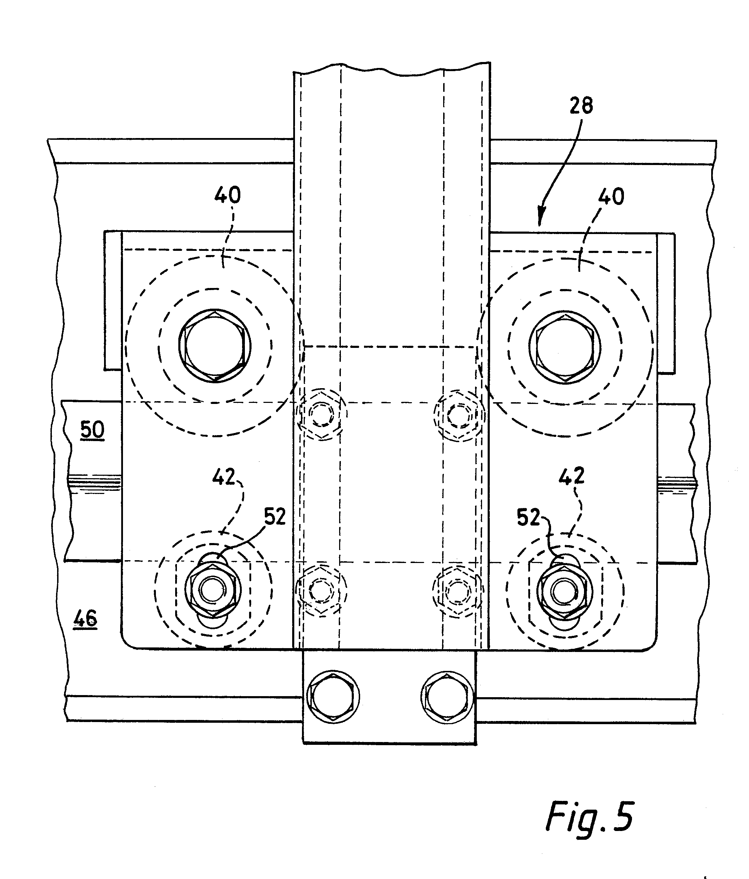

Figures 4 and 5 show the trolley assembly 28 at the bottom of one side of a framework section 22.

Each trolley assembly has a pair of upper wheels 40 and a pair of lower wheels 42, carried by a bracket means 44 bolted to the bottom of the framework section 22. The wheels are housed within a bolted-on casing 46. Figure 4 also shows part of the flexible outer cover 20 of the cover assembly, which is fixed to the framework section 22 at 48. The upper pair of wheels 40, longitudinally spaced along the length of the rail 50 for imparting the required vertical stability to the framework section 22, are in vertical alignment with a pair of lower wheels 42 of smaller diameter. The rail 50 can be seen to be of box section, and the wheels 40, 42 are V-grooved around their peripheries to run on such rail, the upper wheels 40 on the top thereof and the lower wheels 42 on the lower side thereof. For ensuring that the trolley assembly runs efficiently on the rail whilst being restrained against lift, the lower wheels 42 are vertically adjustable in position, as indicated by adjustment slot 52.

The grooves in the wheels may be concavely radiused to run on a circular section rail, if preferred.

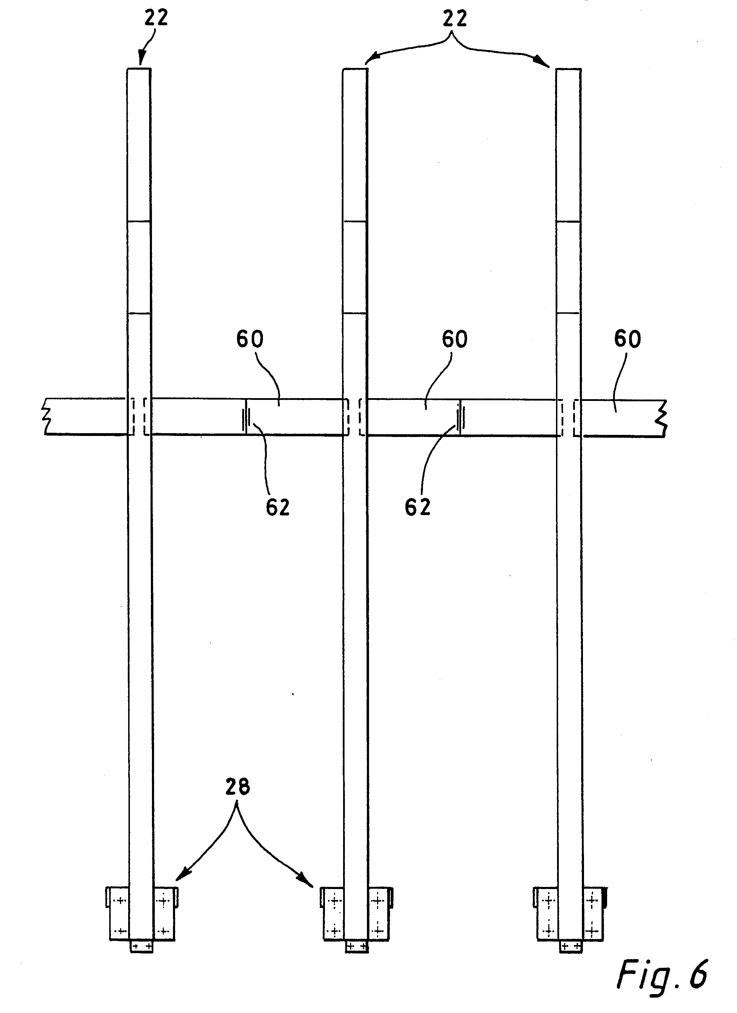

Figure 6 shows a biassing means interconnecting adjacent framework sections 22. The biassing means comprises a plurality of polypropylene strips 60, say 3 mm thick and 100 mm wide, fixed as by bolting at their ends between adjacent framework sections 22 and pre-creased as indicated at 62 to fold outwardly when the framework sections are collapsed towards one another during retraction of the cover assembly. The biassing strips 60 thereby act to bias the outer cover 20 outwardly during retraction, causing said cover to bulge or fold outwardly and not inwardly, thereby to prevent the cover fouling the load. Biassing strips 60 are provided on each side of the framework structure. The drawing shows a single line of biassing strips at an intermediate level in the height of the framework structure, but two or more such lines thereof may be provided if preferred.

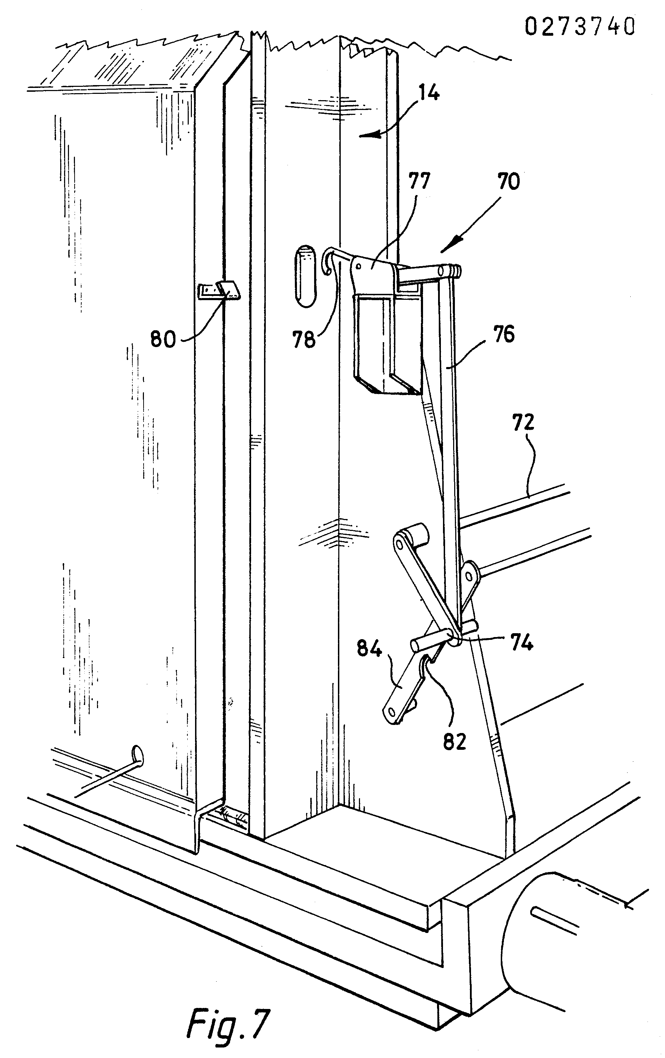

Figure 7 shows a latching means for holding the cover assembly tightly closed against the wagon bulkheads in the closed condition of said assembly. Said latching means also acts longitudinally to tension the cover assembly in said closed condition.

A latching means generally referenced 70 is provided on each side of the bulkhead 14, linked by a coupling 72 for simultaneous operation. Each latching means comprises a handle 74 which via a linkage 76 operates an over-centre controlled latch 77 which includes a hooked latching member 78. The latching member 78 engages a catch 80 on the leading face of the end framework section of the cover assembly as the latter closely approaches the bulkhead towards the completion of closure. Operation of the latching means will then longitudinally tension the framework structure in tight engagement with the bulkhead. The handle 74 is then locked in a recess 82 in a member 84 mounted to the bulkhead in order to ensure that the tight closure is maintained.

In place of the described plastics biassing strips, each framework section may be in two parts hinged at its top point 90 (see Figure 3). When the cover assembly is retracted, power means such as hydraulic rams may act to pivot the two parts of each framework section slightly further apart, thereby to bias the outer cover outwardly away from the load.

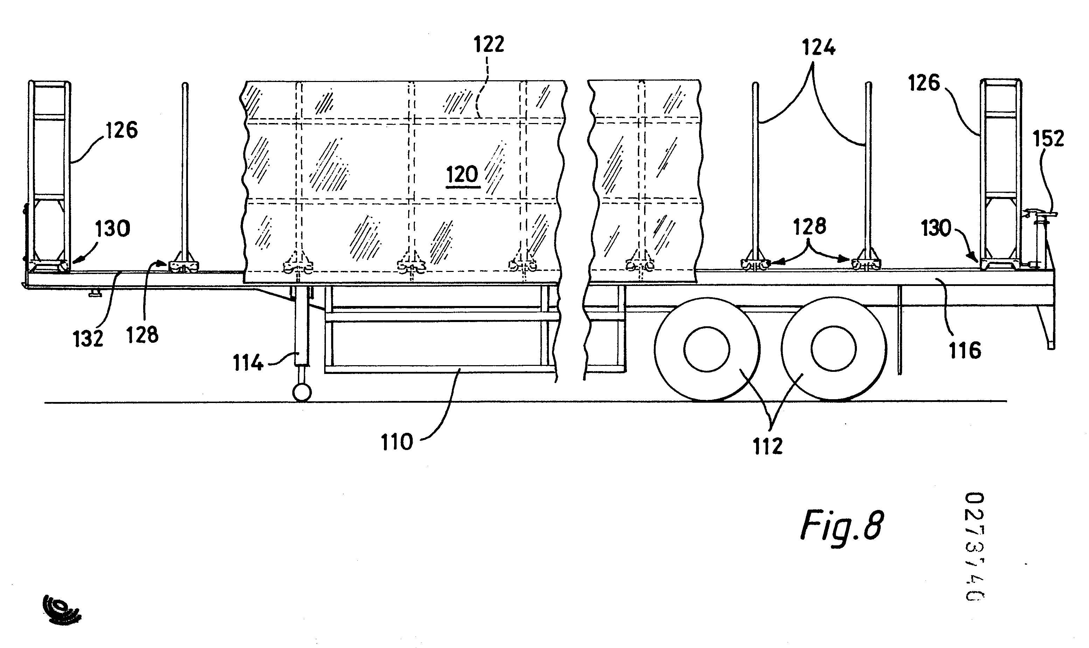

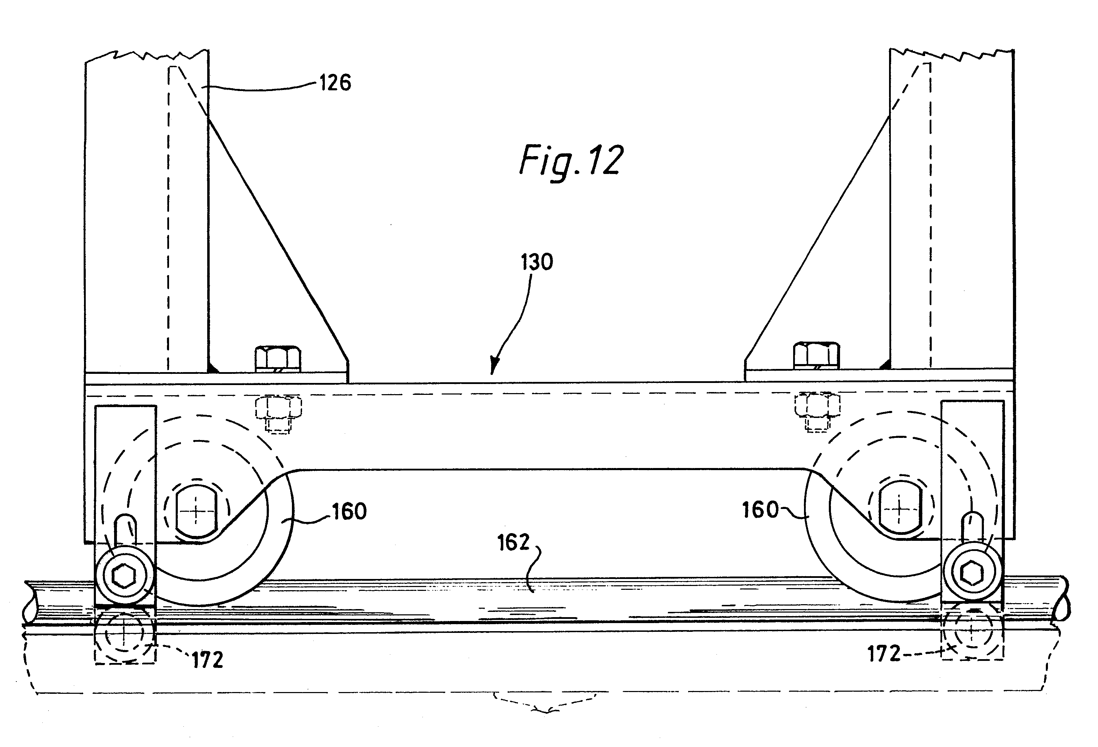

Referring now to Figures 8 to 14, a vehicle trailer with chassis 110, road wheels 112, stationary front end support 114 and side rave 116 is equipped with a cover assembly comprising cover 120 (having longitudinal reinforcement webbings 122) supported by and attached by means of internal buckles and straps to a supporting framework which has intermediate framework sections 124 and end framework sections 126.

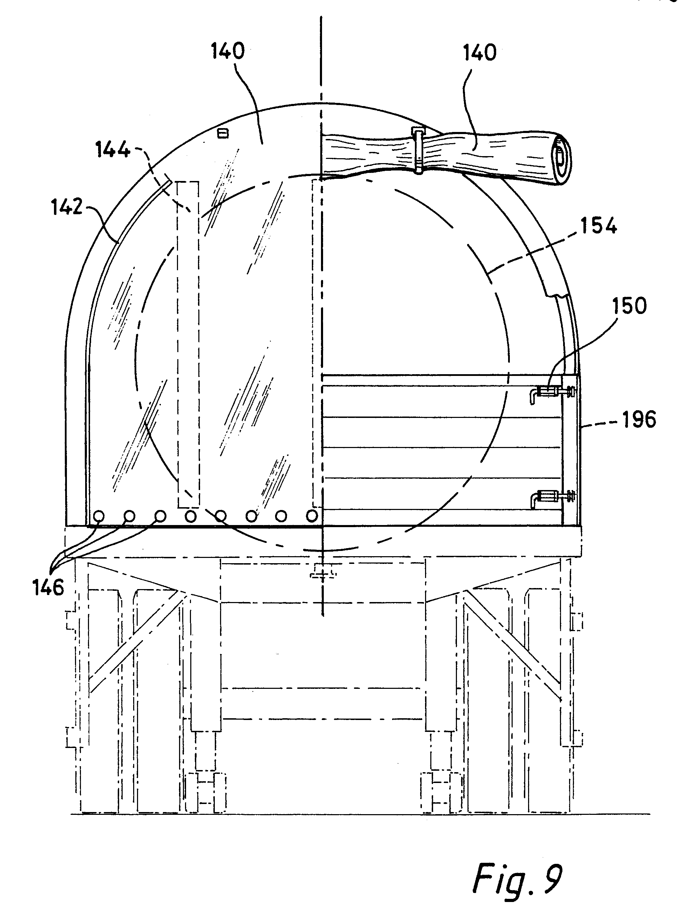

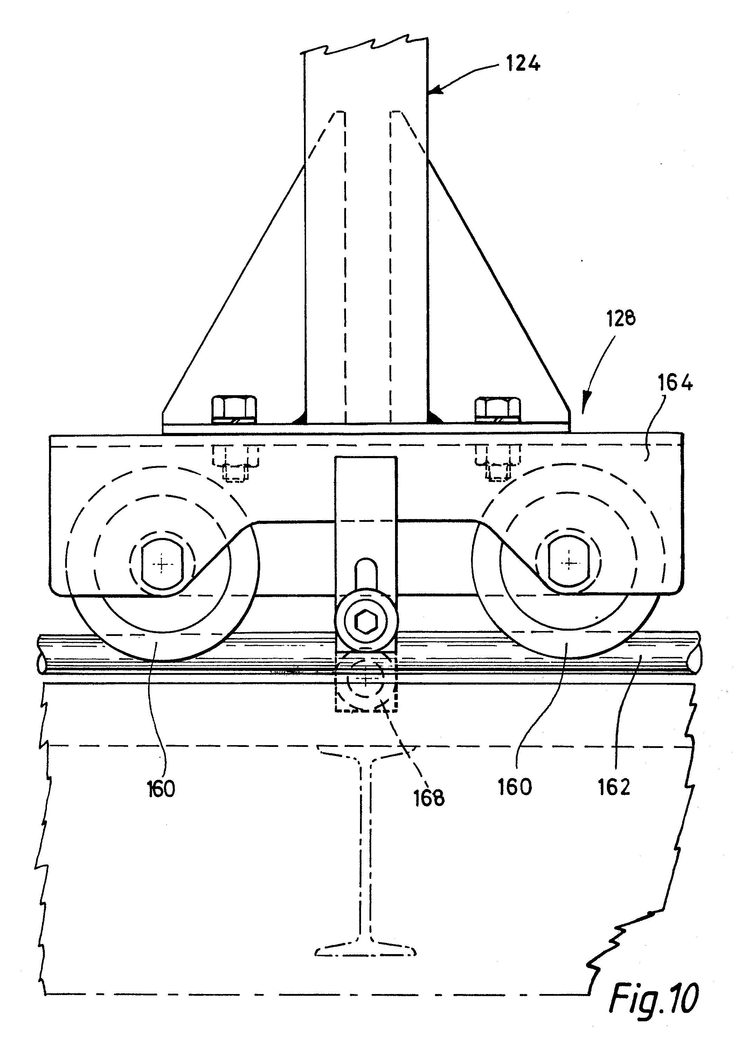

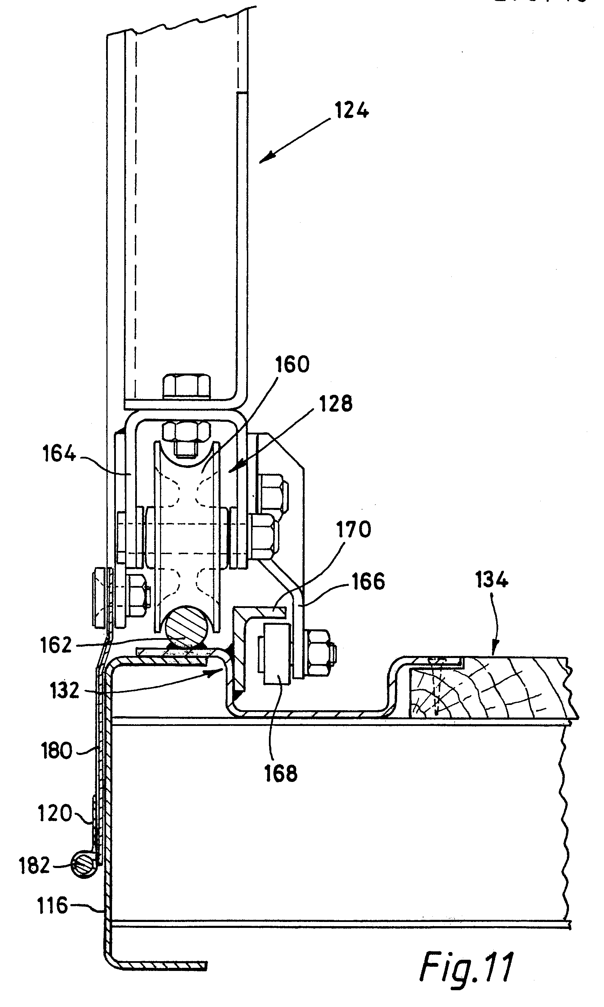

Each framework section 124, 126 is generally dome-shaped (see Figure 9) and is supported by a trolley assembly 128 or 130 later described with reference to Figures 10 to 12. The trolleys 128, 130 run on a rail structure 132 extending along each side of the vehicle, being secured between the rave 116 and the vehicle floor 134 (see Figure 11). Alternatively, in the case of a newly manufactured vehicle to be equipped with the cover assembly, the rail structure could be integrally formed with the rave.

The cover includes end panels 140, which, as shown in Figure 9, secure by zip fastenings 142 to the longitudinally extending main part of the cover and, when unzipped, roll up upwardly with the aid of pre-rolled plastics strips 144 inserted in vertical pockets in the end covers. Bottom fastening of the end covers is by means of eyelets 146 which cooperate with lockable D-rings. Alternatively, a rigid tube extends through sleeves welded to the end covers, the tube being adapted for securing at its opposite ends.

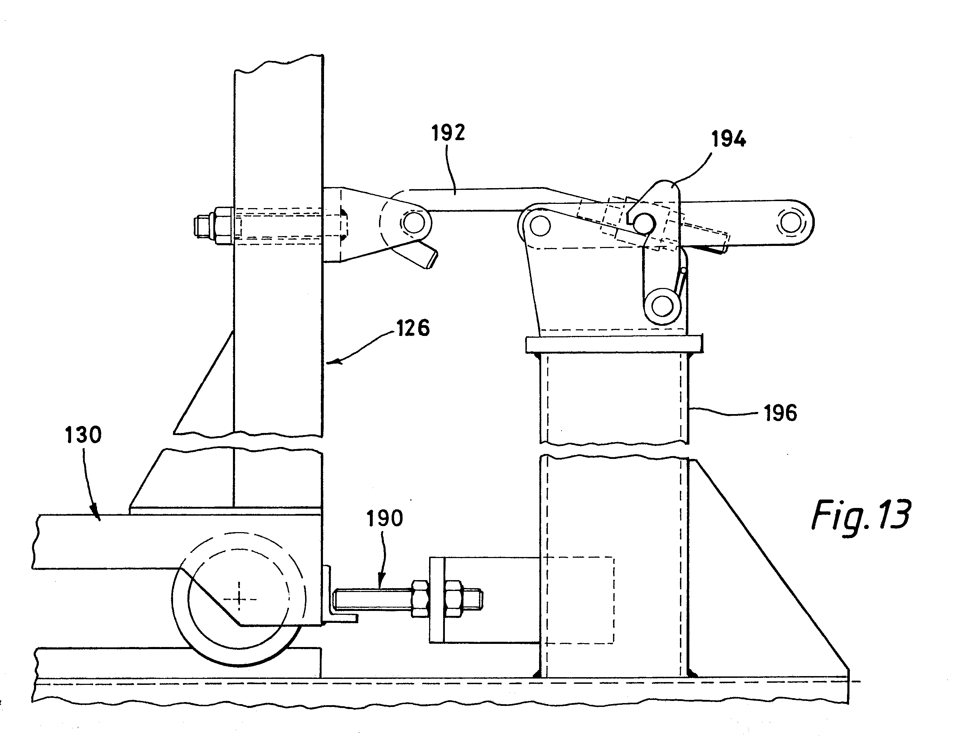

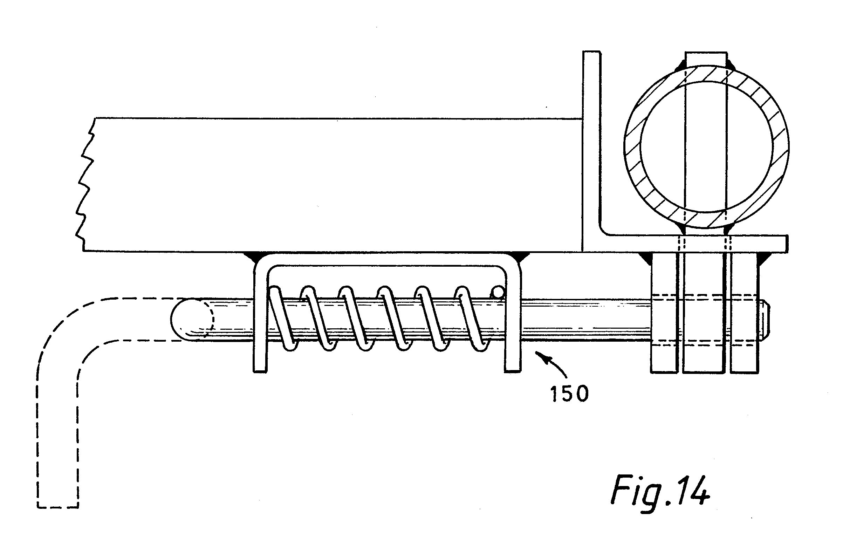

In Figure 9, reference 150 denotes one of a pair of spring-loaded latch bolts, shown in detail in Figure 14, which releasably secure the front end trolley to the front bulkhead 196 or the like of the vehicle trailer. In Figure 9 the bolts 150 are horizontal but could alternatively be vertical. Reference 152 in Figure 8 denotes a rear end trolley over-centre latch, also shown in Figure 13.

Moreover, Figure 9 serves to indicate at 154 a typical load, e.g. a large steel coil, which is to be conveyed by the vehicle under weather protection by the cover assembly. The floor of the vehicle may be provided with a shallow curved well in which the coil is seated and which well can be filled in to provide a flat bed for carrying other goods.

Making reference also to Figures 10 and 11, each intermediate framework section 124, preferably made of rolled aluminium tube, is mounted on a trolley 128 having two circumferentially, concavely radiused wheels 160 running on a round rail 162 forming part of the rail structure 132. The wheels 160 are longitudinally spaced on a trolley frame 164 which has a central depending bracket 166 on which a circumferentially flat wheel 168 is adjustably mounted in a position to engage under a flange 170 forming a part of the rail structure 132 laterally displaced relative to the wheels 160. The arrangement of the trolley is thus such that each framework section 126 is independently supported in a substantially vertical orientation, and cannot lift free of the rail structure fixed to the vehicle floor.

The trolleys 130 for the end framework sections 126 are generally similar, but as double interconnected frameworks are employed at the ends, together with longer trolleys, the latter incorporate a pair of adjustably mounted antilift wheels 172.

The rail structure 132 is preferably made of steel, the trolley frame 164 of mild steel, and the wheels of machined aluminium with plain non-lube bushed bearings. The cover is preferably made of PVC coated polyester fabric.

Figure 11 also shows the manner in which weatherproofing is effected at the bottom of the sides of the cover. Prestressed plastics strips 180 are secured to the cover and bias the cover inwardly against the outside of the vehicle rave, the bottom hem of the cover 120 being stiffened by a cord 182.

The latch bolt of Figure 14 will be clear without description as, in general, will be the over-centre tensioning latch of Figure 13. However, with reference to the latter, it will be noted that the tension to be achieved is adjustable by means of the bottom stop bolt 190 and the effective length of the latching element 192. Spring loaded latch member 194 is so formed as also to act as a safety catch.

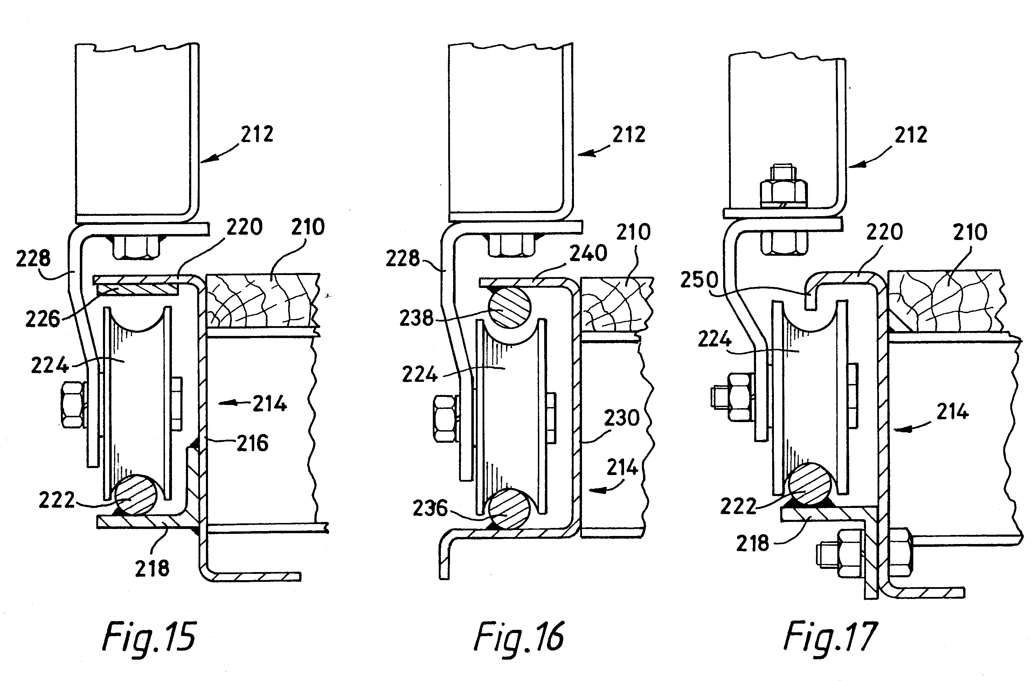

Referring now to Figures 15 and 16 of the drawings, reference 210 denotes the load-bearing floor of a goods-carrying vehicle, and reference 212 denotes part of a retractable hood for covering the load. The hood comprises a collapsible arch-shaped framework supporting a flexible weatherproof cover, as hitherto described.

The vehicle floor 210 spans the raves which extend longitud inally at both sides of the vehicle. The two raves, one at each side of the vehicles, are identically formed, and Figures 15 and 16 each show one embodiment of one such rave, generally referenced 214.

In Figure 15, the rave is formed as a generally Z-shaped integral structure 216 having an L-bracket welded thereto to create a horizontal flange 218, thereby with the upper limb 220 of the Z-structure to form a part of U-shaped cross-section open laterally outwards of the side of the vehicle.

A longitudinally extending wheel-supportive rail 222 is welded to the flange 218 on the inside of the U-shaped cross-section.

Figure 15 also shows one of the wheels 224 on which the retractable hood is supported. This wheel 224 is accommodated within the U-shaped cross-section to run on the rail 222 in the longitudinal direction thereof. An anti-lift member 226 is provided on the underside of the upper limb of the U-shaped cross-section.

It is alternatively possible to turn down the outer end of the upper limb of the U-shaped cross-section, to form a dependent flange in line with the wheels 224 and for serving as an anti-lift member, as shown in Figure 17 at 250.

It can also be seen that the vehicle wheel 224 is mounted to the inside face of an L-bracket 228 fixed to the base of the arch-shaped hood framework.

It is to be noted that the U-shaped part of the rave is located with its upper limb substantially at floor level, so that the wheel-supportive rails and wheels running thereon are advantageously disposed below this level, protectively accommodated within the U-shaped cross-section.

Figure 16 shows an alternative embodiment, differing from the embodiment of Figure 1 in respect of the structure of the rave. The same references as in Figure 15 are employed for parts not specifically referred to.

In this alternative embodiment, the rave is a wholly integral structure comprising the U-shaped part 230 and a dependent flange 232 at the internal edge of the lower limb 234 of the U-section to which the wheel-supportive rail 236 is welded on the inside of said U-section. An anti-lift rail 238 is welded to the underside of the upper limb 240 of the U-shaped cross-section. This alternative structure provides substantially the same advantages as those referred to in connection with the embodiment of Figure 15.

In Figure 17 is shown a modified rear corner pillar supporting the rear end locking and tensioning device. In this drawing, the latch is generally referenced 300, and the associated stop bolt 302. Reference 304 denotes part of the end framework section, mounted to a trolley 306 running on a wheel-supporting rail 308 accommodated within a vehicle rave 310.

The rear corner pillar 312 carrying the latch 300 is pivotally mounted at 314 to a bracket 316 bolted to the rear end of the rave structure. When the cover assembly is retracted to the front end of the vehicle platform, the pillar 312 is releasable to enable it to pivot laterally outwards from the mounting bracket 316, thus clearing the space above the rear end of the platform to assist ease of loading.

Additionally, however, the bracket 316 is fully detachable by releasing its securing bolts, whereby, if desired, the whole cover assembly can be rolled off the back of the vehicle platform on to slave rails, on which the cover assembly can remain parked while the vehicle is in temporary use as an open flat bed truck or trailer.

Various modifications of the above-described and illustrated embodiments are possible within the scope of the invention defined by the appended claims.

**Claims**

1. A collapsible framework arrangement, for supporting a retractable cover for a load on a vehicle platform, comprising a framework structure having a plurality of arched framework sections each having mounted thereto at the bottom of each side a wheeled trolley, which wheeled trolleys when in engagement with guide rail structures on the vehicle platform act to maintain vertical stability of the arched framework sections individually.

2. An arrangement according to claim 1, wherein each wheeled trolley has a pair of wheels for engagement with the top or underside of the rail structure with longitudinal spacing along said rail therebetween, together with further means engaging beneath or with the top of the rail structure, whereby the framework section is restrained against lift.

3. An arrangement according to claim 2, wherein said further means comprises a further wheel or a second pair of wheels engaging the underside of the rail structure, said further wheel or second pair thereof being either in vertical alignment with the wheels of the first-mentioned pair or laterally displaced from the latter.

4. An arrangement according to claim 2 or claim 3, wherein at least the wheels of the first pair are either V-grooved for engagement with a box-section rail or radiused for engagement with a circular-section rail forming part of the rail structure.

5. An arrangement as claimed in any of claims 1 to 4, including biassing means connected between adjacent framework sections for acting on the cover, when the cover assembly is retracted, to cause said cover to bulge and/or fold laterally outwardly.

6. An arrangement according to any of claims 1 to 4, wherein each arched framework section is formed in two similar parts articulated to one another at the top of the arch, and power means are operable, on retraction of the cover assembly, to pivot the two sides of each framework section further apart, thereby biassing the cover sides outwardly from the load.

7. An arrangement according to any of claims 1 to 6, wherein the cover closes against a vehicle platform end structure and wherein the end framework section is equipped on each side with a catch member which, as the cover assembly closes towards the end structure, engages a latch member forming part of an over-centre latch carried by the end structure, whereby, when the over-centre latch is operated, the end framework is drawn into and maintained in a condition of tight closure with the platform end structure in which the cover assembly is longitudinally tensioned.

8. An arrangement according to any of claims 1 to 7, wherein the vehicle platform has an end structure in the form of a corner pillar pivotably and/or detachably mounted to the vehicle platform at one end thereof, whereby it can be pivoted out of the loading path when the cover assembly is retracted to the other end of the platform and/or be detached to allow the cover assembly to be wheeled off the vehicle platform onto parking rails.

9. An arrangement according to any of claims 1 to 8, wherein each rail structure includes a platform side member, which may be constituted by a vehicle rave, formed with a part having a U-shaped cross-section, open laterally outwards of the vehicle, and a longitudinally extending wheel-supportive rail fixedly carried by the side member or rave within the U-shaped cross-section thereof.

10. An arrangement according to any of claims 1 to 9, wherein the cover includes arch-shaped end panels, which can be rolled up upwardly relative to the main portion of the cover to provide access to the load and rolled down and secured to the main cover portion to complete closure of the cover assembly around the load.

**70**

**70**

**14**

**20**

**14**

**10**

**10**

**12**

*Fig.1*

30  22  22

28  28  28

0273740

*Fig. 2*

0273740

Fig.3

0273740

Fig.4

0273740

Fig. 5

0273740

Fig.6

*Fig. 7*

0273740

*Fig.8*

0273740

Fig. 9

0273740

Fig.10

0273740

Fig.11

*Fig.12*

126

130

160

160

162

172

172

**Fig.13**

Fig.14

150

0273740

Fig.15          Fig.16          Fig.17

02737740

*Fig.18*